# EUROPÄISCHE PATENTSCHRIFT

(11) **EP 1 947 168 B1**
(45) Veröffentlichungstag und Bekanntmachung des Hinweises auf die Patenterteilung: **18.08.2010**
(21) Anmeldenummer: 07022721.0
(22) Anmeldetag: 23.11.2007
(51) Int. Cl.: C11D 3/39, A01N 59/16, B01D 65/06, B08B 3/08

(54) **Verfahren zur Reinigung einer Anlage**
Method for cleaning a plant
Procédé destiné au nettoyage d'une installation

(30) Priorität: 18.12.2006 DE 102006060204
(43) Veröffentlichungstag der Anmeldung: 23.07.2008
(73) Patentinhaber: Krones AG, 93073 Neutraubling (DE)
(72) Erfinder: Fischer, Sven Dr., 93083 Obertraubling (DE)
(74) Vertreter: Grünecker, Kinkeldey, Stockmair & Schwanhäusser Anwaltssozietät

(56) Entgegenhaltungen:
- WO-A-2005/044968
- DATABASE WPI Week 198641 Derwent Publications Ltd., London, GB; AN 1986-267353 XP002318621 & JP 61 192748 A (ASAHI CHEM IND CO LTD) 27. August 1986 (1986-08-27)

## Beschreibung

Die Erfindung bezieht sich auf ein Verfahren zum Reinigen einer Anlage der im Oberbegriff von Anspruch 1 erläuterten Art.

Ein derartiges Verfahren ist aus der WO 2005/044968 bekannt. In dieser Druckschrift sind eine Vielzahl von Reinigungsverfahren beschrieben, die alle mit einem Reinigungs-, Desinfektions- und Indikatormittel arbeiten, das auf einem Permanganat, insbesondere Kaliumpermanganat in alkalischem Milieu beruht. Dieses Mittel ist auf dem Markt erhältlich und beispielsweise auch in der EP 1 343 864 beschrieben. Das verwendete Reinigungs-, Desinfektions- und Indikatorsmittel enthält außer dem wasserlöslichen Permanganat ein weiteres Oxidationsmittel, dessen Oxidationspotential über jenem von Mn VII zu Mn VI liegt. Das sauere Milieu kann bereits im verkauften Produkt eingestellt werden, wird jedoch bevorzugt beim Kunden durch Vermengung mit einem alkalischen Mittel verwirklicht, wobei der pH-Wert vorzugsweise mindestens zwölf betragen sollte. Im letzteren Falle enthält das Reinigungs-, Desinfektions- und Indikatormittel zusätzlich pH-Puffersubstanzen, vorzugsweise primäre und/oder sekundäre Alkalikarbonate, wie etwa Natriumkarbonat und/oder Natriumhydrogenkarbonat, sowie oxidationsbeständige Polyphosphate. In der beschriebenen Zusammensetzung kann Permanganat, insbesondere Kaliumpermanganat als sehr wirksames Reinigungsmittel mit Desinfektionswirkung eingesetzt werden. Da Kaliumpermanganat je nach der aufgenommenen Schmutzfracht beim Durchfließen der zur reinigenden Anlage Farbveränderungen bis zu einem Farbumschlag von anfänglich violett zu grün und gelb zeigt, kann das bekannte Mittel auch als Indikatorlösung eingesetzt werden, um den Reinigungsgrad zu überprüfen. Bleibt die in der Anlage zirkulierende Flüssigkeit nach Zugabe des Kaliumpermanganats violett, so ist die Anlage ausreichend gesäubert. Ein Farbumschlag zu grün und insbesondere zu gelb zeigt jedoch an, dass die Anlage nur unvollständig gereinigt, bzw. noch nicht sauber ist. Bei Verwendung als Reinigungsmittel kann das bekannte Mittel in einer so genannten Stapelreinigung verwendet werden, d.h. es wird nach dem Durchlauf der Anlage aufgefangen und, gegebenenfalls nach einer Auffrischung, im nächsten Reinigungsvorgang wieder verwendet. Der Indikator ist dann aber beim nächsten Reinigungsvorgang nicht mehr voll einsetzbar, da er ja schon zum Teil verbraucht ist. Eine korrekte Begutachtung des Reinigungserfolges ist dann nicht mehr uneingeschränkt möglich, da die Reinigungsflüssigkeit die Eigenschaft besitzt, bei Farbänderungen in ihrem Grundzustand (d.h. z.B. von Lila zu grün und gelb) sensibler zu wirken, als bei Farbänderungen im bereits leicht verwendeten Zustand (d.h. z.B. von Grün zu Gelb). Um bei der bisherigen Stapelreinigung eine optimale Reinigungsüberprüfung vornehmen zu können, muss also nach jeder Reinigung ein teurer Neuansatz der Lösung erfolgen. Beim Einsatz als (alleiniges) Indikatormittel muss das Mittel bei den bekannten Verfahren verworfen werden.

Die JP-A-6119748 beschreibt ein Verfahren zum Entfernen eines Polymers mit einem Reinigungsmittel, das NaOH und KMnO₄ enthält, wobei das Polymer in Lösung gehen soll.

Der Erfindung liegt die Aufgabe zu Grunde, ein Verfahren zum Reinigen einer Anlage bereitzustellen, das ökonomisch und Abwasser schonend arbeitet.

Die Aufgabe wird durch die im Anspruch 1 angegebenen Merkmale gelöst.

Mit dem erfindungsgemäßen Verfahren wird das als Indikator benutzte Indikatormittel einer sehr sinnvollen und ökonomischen Weiterverarbeitung zugeführt, indem es nach dem Einsatz als Indikator als Reinigungsmittel weiterverwendet wird.

Vorteilhafte Weiterbildungen der Erfindung sind den Unteransprüchen zu entnehmen.

Die Erfindung ist besonders bei einem Stapelreinigungsverfahren unter Verwendung einer Reinigungslauge anwendbar, d.h. bei einem Verfahren, bei dem auch die Reinigungslauge für eine Wiederverwendung aufgefangen wird, wobei das benutzte Indikatormittel zweckmäßigerweise zum Auffüllen der Reinigungslauge eingesetzt wird.

Das Indikatormittel sollte zweckmäßigerweise nach dem Abschluss des Reinigungsvorganges aber bevorzugt vor einem Sterilisationsvorgang eingesetzt werden, insbesondere dann, wenn eine durchgehende Sterilisierung erforderlich ist.

Die Wirkung des Indikatormittels kann visuell überprüft werden, wird jedoch bevorzugt durch eine Überwachungseinrichtung festgestellt, die die festgestellten Werte mit einem Soll-Wert vergleicht.

Ist-Werte und Soll-Werte der Indikatorwirkung können als absolute Werte festgelegt werden, werden jedoch bevorzugt in einem "Vorher/Nachher"-Abgleich der Farbwerte festgestellt.

Das Verfahren ist besonders zum Reinigen eines Membranfilters, insbesondere eines Kunststoffhohlfaserfilters geeignet.

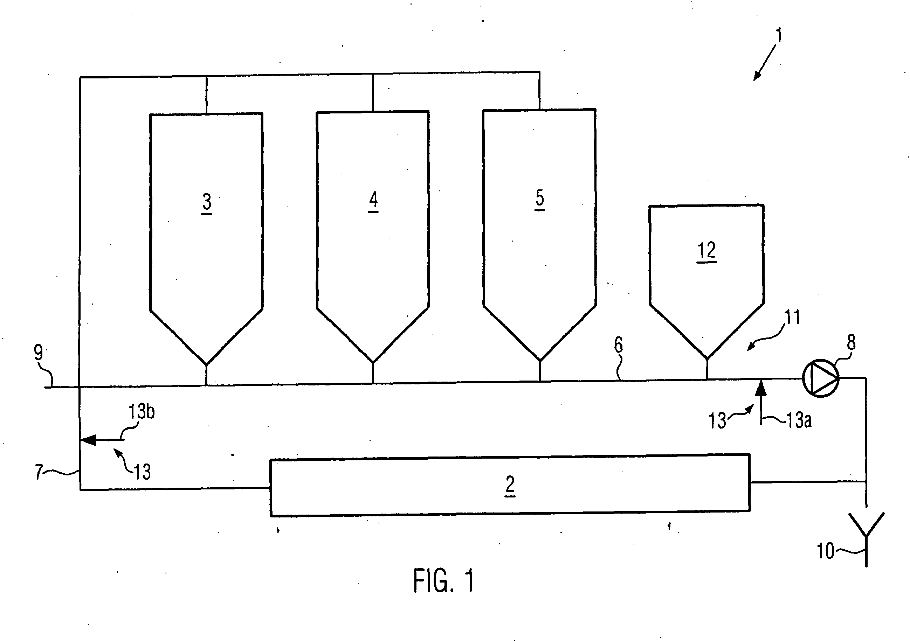

Ein Ausführungsbeispiel der Erfindung wird nachfolgend anhand der einzigen Fig. 1 näher erläutert.

Fig. 1 zeigt in stark schematisierte Darstellung eine Vorrichtung 1 zum Reinigen einer nur als Block dargestellten Anlage 2. Die Vorrichtung 1 kann auf irgendeiner bekannten, insbesondere einer CIP (Clean-In-Place)-Einrichtung beruhen, wie sie auch bislang schon zum Reinigen von Anlagen verwendet wurden. Die Vorrichtung 1 kann zum Reinigen beliebiger Anlagen 2 eingesetzt werden, wird jedoch bevorzugt zum Reinigen von Anlagen der Lebensmitteltechnik, insbesondere der Getränkeabfüllung eingesetzt. Die Anlage 2 kann Membranfilter, insbesondere Kunststoffhohlfaserfilter enthalten, bei denen festgestellt werden musste, dass sie durch herkömmliche Verfahren nur schwer Lebensmittel geeignet gereinigt werden können.

Die Vorrichtung 1 enthält die üblichen Bestandteile derartige Reinigungsanlagen für eine Stapelreinigung (batchweise - Reinigung), wie beispielsweise einen Vorratsbehälter 3 für eine der üblicherweise verwendeten Laugen, einen Vorratsbehälter 4 für eine der üblicherweise verwendeten Säuren und ggf. einen Vorratsbehälter 5 für Heißwasser, die jeweils über eine bevorzugt gemeinsame Vorlaufleitung 6 und eine Rücklaufleitung 7 mit der Anlage 2 verbunden sind. In der Vorlaufleitung 6 ist eine Pumpe 8 und die üblichen, in Fig. 1 nicht dargestellten, Ventile und Armaturen vorgesehen. Weiterhin ist ein Wasseranschluss 9 (Kaltwasser, ggf. Trinkwasser) und eine Abwasserleitung 10 vorhanden.

Die verwendeten Substanzen, also im dargestellten Ausführungsbeispiel die Lauge, die Säure und das Heißwasser, entsprechen den Substanzen wie sie auch in herkömmlichen CIP-Reinigungsanlagen verwendet werden. So kann beispielsweise die Lauge im Vorratsbehälter 3 eine Temperatur zwischen 85 und 95 Grad Celsius, insbesondere 90 Grad Celsius und die Säure im Vorratsbehälter 4 Raumtemperatur bis 60 Grad Celsius aufweisen. Der Vorratsbehälter 5 für Heißwasser ist nur dort notwendig, wo eine durchgehende Sterilisierung notwendig ist. Der Behälter 5 enthält Heißwasser unter Druck- und Temperaturbedingungen, die eine Rücklauftemperatur zwischen 120 Grad Celsius und 130 Grad Celsius sicherstellen.

Die Vorrichtung 1 enthält weiterhin eine Einleitungseinrichtung 11 für ein Indikatormittel. Die Einleitungseinrichtung 11 kann mit einem Vorratstank 12 verbunden oder als kontinuierliche, in-line Einleitung ausgebildet sein. Der Vorratstank ist vorzugsweise direkt mit der Anlage 2 verbunden und weist vorzugsweise ein Volumen auf, womit die Anlage 2 mehrmals überprüft werden kann. Das Volumen des Vorratstanks 12 ist vorzugsweise kleiner, als das Volumen des Laugebehälters 3, das Volumen des Vorratsbehälters 4 sowie das Volumen des Behälters 5. Während die Behälter 3, 4 und 5 untereinander verbunden sind, ist der Vorratstank 12 nur über die Einleitungseinrichtung 11 mit der Anlage 2 verbunden.

Die Einleitungseinrichtung 11 befindet sich im Vorlauf 6 vor der Anlage 2, stromabwärts des letzten Reinigungsmittelbehälters und bevorzugt stromaufwärts der Pumpe 8. Durch die Einleitungseinrichtung 11 wird ein Indikatormittel in den Vorlauf eingeleitet. Das Indikatormittel ist ein Mittel auf der Basis von Permanganat, insbesondere Kaliumpermanganat, das, ursprünglich violett, mit organischen Verunreinigungssubstanzen unter Farbabschwächung oder Farbumschlag in grün bzw., bei starker Verschmutzung, in gelb, sehr sensibel reagiert. Dabei werden die Schmutzpartikel gleichzeitig oxidiert, woraus die gute Reinigungswirkung des Mittels resultiert. Schließlich ist Kaliumpermanganat auch für seine gute Desinfektionswirkung bekannt, was weiterhin zur ausgezeichneten Eignung von Kaliumpermanganat bei der Reinigung insbesondere Lebensmittel führender Anlagen beiträgt. Das Permanganat wird in saurem Milieu verwendet, das bevorzugt durch Zumischen der ohnehin in der Vorrichtung 1 vorhandenen Lauge eingestellt wird. Der pH-Wert sollte wenigstens 11, bevorzugt 12 betragen. Als Indikatormittel eignet sich jedes im Handel erhältliche Indikatormittel gemäß Anspruch 1 das gleichzeitig Reinigungswirkung entfalten kann wie das in der oben erwähnten WO 2005/044968, ausführlich beschriebene Reinigungs-, Desinfektions- und Indikatormittel.

Die Temperatur des Indikatormittels beträgt bevorzugt 40 bis 50 Grad Celsius.

Die Überwachung der Reinigungswirkung, d. h. die Änderung des Farbwertes durch Aufhellung der ursprünglich violetten Farbe oder durch Farbumschlag in grün oder gelb, kann visuell beobachtet werden, wird jedoch bevorzugt durch eine Überwachungseinrichtung 13 festgestellt. Die Überwachungseinrichtung 13 enthält bevorzugt einen ersten Farbwert-Ermittler 13a, der vor der Anlage 2 (in der Vorlaufleitung 6) angeordnet ist und den anfänglichen Farbwert der Indikatorlösung feststellt, und einen zweiten Farbwert-Ermittler 13b nach der Anlage 2 (in der Rücklaufleitung 7), der den Farbwert nach Durchlaufen der Anlage 2 feststellt. Als Farbwertermittler kann jede bekannte Einrichtung eingesetzt werden, bevorzugt ist ein so genanntes Photo-eye. Allerdings können auch andere Veränderungen des Indikator-, Desinfektions- bzw. Reinigungsmittels bestimmt / gemessen werden, wie z.B. das veränderte und / oder verbliebene Oxidationspotential. Es sind also auch Messmethoden denkbar, die keine Bildauswertung vornehmen (Farbveränderung mit Photo-eye) sondern einen direkten chemischen Effekt, z.B. durch Messung des pH-Wertes erfassen.

Das Indikatormittel kann einen vorbestimmten und abgespeicherten Farbwert aufweisen, so dass nur ein Farbwertermittler im Rücklauf nötig ist, bevorzugt wird der ursprüngliche Farbwert jedoch unmittelbar stromabwärts der Einleitungseinrichtung 11 mit Hilfe der Überwachungseinrichtung 13 festgestellt. Dann wird der Indikatoransatz oder die -lösung durch die Anlage 2 geschickt und die Farbwertveränderung in der Rücklaufleitung 7 festgestellt. Hat sich der Farbwert nicht oder nur unwesentlich verändert, so ist davon auszugehen, dass die Anlage 2 keine organischen Schmutzbestandteile mehr enthält. Ist eine Farbwertveränderung festgestellt worden, der außerhalb des vorab festgelegten Toleranzbereichs liegt, so kann darauf geschlossen werden, dass die Reinigung / Desinfektion nicht ausreichend war und es müssen einer oder mehrere der oben erwähnten Reinigungsschritte wiederholt werden. Das als Indikator verwendete Indikatormittel wird, nachdem es seine Funktion als Indikator erfüllt hat, für eine Weiterverwendung als Reinigungsmittel aufgefangen. Bevorzugt wird das Indikatormittel über die Rücklaufleitung 7 in den Laugebehälter 3 eingefüllt und ergänzt dort den Verlust an gestapelter Lauge (bis zu 30 %), der beim Reinigungsvorgang aufgetreten ist. Die im Laugebehälter 3 gestapelte Lauge kann auch gegebenenfalls nachgeschärft werden, d.h. durch Hinzufügen frischer Lauge auf den erforderlichen pH-Wert und durch Nachheizen auf der erforderlichen Temperatur gehalten werden. Zweckmäßigerweise werden sowohl der pH-Wert als auch die Temperatur durch übliche Maßnahmen festgestellt und gegebenenfalls auch überwacht.

Durch Verwendung des auf Kaliumpermanganat basierenden Indikatormittels wird bereits eine gute desinfizierende Wirkung erreicht. Sind jedoch sterilere Verhältnisse erforderlich, so wird nach dem Einsatz des Indikatormittels mit Heißwasser sterilisiert.

Zur Durchführung des erfindungsgemäßen Verfahrens wird zunächst einer der üblichen Reinigungsverfahren, beispielsweise das Reinigungsverfahren mit den folgenden Verfahrensschritten durchgeführt:
1. Mit Wasser aus dem Kaltwasseranschluss 9 spülen.
2. Laugereinigung, d.h. Durchleiten von gelagerter Lauge aus dem Laugetank über ein vorbestimmtes Zeitinterval durch die Anlage 2.
3. Mit Wasser spülen aus dem Kaltwasseranschluss 9.
4. Säurereinigung (falls erforderlich), d.h. Durchleiten gestapelter Säure aus dem Vorratsbehälter 4 über ein vorbestimmtes Zeitinterval durch die Anlage 2.
5. Mit Wasser aus dem Wasseranschluss 9 spülen.
6. Einleiten des Indikatormittels über die Einleitungseinrichtung 11 in einer vorbestimmten Menge und/oder über ein vorbestimmtes Zeitintervall.
7. Rückführen des benutzten Indikatormittels in den Laugebehälter 3.
8. Mit Wasser spülen, wobei ohne weitere Anforderungen an die Sterilität mit Trinkwasser und bei hohen Anforderungen an die Sterilität mit Sterilwasser (kalt) gespült wird.
9. Wenn erforderlich, Sterilisation mit Heißwasser und / oder Dampf aus dem Behälter 5.

Das in den Laugebehälter 3 rückgeführte, benutzte Indikatormittel hat wegen seiner Verwendung nach dem Reinigungsvorgang, der normalerweise zu einer befriedigenden Schmutzentfernung geführt haben sollte, nichts oder kaum von seiner Reinigungs- und Desinfektionswirkung eingebüsst. Da die Reinigungs- und Desinfektionswirkung des Mittels nicht proportional mit der Indikatorwirkung zusammenhängt, kann es auch vorkommen, dass die Reinigungs- und Desinfektionswirkung ansteigt, obwohl die Indikationswirkung nachlässt. Dadurch verstärkt das Indikatormittel die Reinigungswirkung der Lauge, was zu immer besseren Reinigungsergebnissen führt, so dass beispielsweise die Durchlaufzeit der Lauge verringert werden kann.

In Abwandlung des beschriebenen und gezeichneten Ausführungsbeispiels kann das erfindungsgemäße Verfahren bei jedem bekannten Reinigungsvorgang eingesetzt werden, wobei der Ablauf der Reinigung und die verwendeten Reinigungsmittel auf die Art der zu entfernenden Schmutzpartikel abgestimmt werden kann. Die Überwachung des Reinigungsergebnisses, d.h. die Überwachung des Farbwertes einschließlich eines eventuellen Farbumschlags kann gegebenenfalls auch visuell erfolgen.

## Patentansprüche

1. Verfahren zum Reinigen einer Anlage (2), mit einem Reinigungsschritt, bei dem die Anlage (2) mit Reinigungslauge durchgespült und das Reinigungsergebnis nach dem Reinigungsschritt durch ein Indikatormittel auf der Basis von Permanganat in alkalischem Milieu überprüft wird, **dadurch gekennzeichnet, dass** das als Indikator benutzte Indikatormittel anschließend in die Reinigungslauge für eine Weiterverwendung in einem nachfolgenden Reinigungsschritt als Reinigungsmittel eingeleitet wird.

2. Verfahren nach Anspruch 1, **dadurch gekennzeichnet, dass** die Reinigungslauge nach dem Reinigungsdurchlauf in einem Laugebehälter (3) für eine Wiederverwendung aufgefangen wird.

3. Verfahren nach Anspruch 2, **dadurch gekennzeichnet, dass** das benutzte Indikatormittel in den Laugebehälter (3) eingeleitet wird.

4. Verfahren nach einem der Ansprüche 1 bis 3, **dadurch gekennzeichnet, dass** die Anlage (2) mit wenigstens einem weiteren Mittel durchgespült wird und das Indikatormittel nach dem letzten Reinigungsschritt in die Anlage (2) geleitet wird.

5. Verfahren nach einem der Ansprüche 1 bis 4, **dadurch gekennzeichnet, dass** das Indikatormittel vor einem Sterilisationsschritt in die Anlage (2) geleitet wird.

6. Verfahren nach einem der Ansprüche 1 bis 5, **dadurch gekennzeichnet, dass** eine durch das Indikatormittel bewirkte Veränderung, insbesondere ein Farbumschlag, durch eine Überwachungseinrichtung (13) festgestellt und mit einem Sollwert verglichen wird.

7. Verfahren nach Anspruch 6, **dadurch gekennzeichnet, dass** die Überwachungseinrichtung (13) einen ersten und einen zweiten Farbwert-Ermittler (13a, 13b) aufweist, wobei der erste Farbwert-Ermittler vor der Einleitung des Indikatormittels in die Anlage (2) und der zweite Farbwert-Ermittler nach dem Verlassen der Anlage (2) angeordnet ist.

8. Verfahren nach wenigstens einem der Ansprüche 1 bis 7, **dadurch gekennzeichnet, dass** sich das Indikatormittel vor der Überprüfung des Reinigungsergebnisses in einem Vorratstank (12) befindet.

9. Verfahren nach einem der Ansprüche 1 bis 7, **gekennzeichnet durch** seine Anwendung zum Reinigen eines Membranfilters, insbesondere eines Kunststoffhohlfaserfilters.

## Claims

1. Method for cleaning a facility (2), including a cleaning step in which the facility (2) is flushed with caustic cleaning solution, and the cleaning result after the cleaning step is tested using an indicator agent based on permanganate in an alkaline environment, **characterized in that** the indicator agent used as indicator is then introduced into the caustic cleaning solution for reuse as cleaning agent in a subsequent cleaning step.

2. Method according to Claim 1, **characterized in that** after the cleaning pass, the caustic cleaning solution is collected in a caustic solution container (3) for reuse.

3. Method according to Claim 2, **characterized in that** the indicator agent used is introduced into the caustic solution container (3).

4. Method according to one of Claims 1 through 3, **characterized in that** the facility (2) is flushed with at least one additional agent, and the indicator agent is conducted into the facility (2) after the last cleaning step.

5. Method according to one of Claims 1 through 4, **characterized in that** the indicator agent is conducted into the facility (2) before a sterilization step.

6. Method according to one of Claims 1 through 5, **characterized in that** a change caused by the indicator agent, in particular a color change, is detected by a monitoring device (13) and compared to a setpoint value.

7. Method according to Claim 6, **characterized in that** the monitoring device (13) has a first and a second color value detector (13a, 13b), the first color value detector being situated upstream from the entry point of the indicator agent into the facility (2), and the second color value detector being situated downstream from the exit point from the facility (2).

8. Method according to at least one of Claims 1 through 7, **characterized in that** the indicator agent is present in a supply tank (12) before the cleaning result is tested.

9. Method according to one of Claims 1 through 7, **characterized by** use thereof for cleaning a membrane filter, in particular a plastic hollow fiber filter.

## Revendications

1. Procédé destiné au nettoyage d'une installation (2), comprenant une étape de nettoyage dans laquelle l'installation (2) est rincée par de la lessive de nettoyage et le résultat de nettoyage est vérifié après l'étape de nettoyage par un agent indicateur à base de permanganate en milieu alcalin, **caractérisé en ce que** l'agent indicateur, utilisé comme indicateur, est ensuite envoyé dans la lessive de nettoyage pour une utilisation ultérieure dans une étape de nettoyage suivante en tant qu'agent de nettoyage.

2. Procédé suivant la revendication 1, **caractérisé en ce que** la lessive de nettoyage, après le cycle de nettoyage, est recueillie dans un réservoir de lessive (3) pour une utilisation ultérieure.

3. Procédé suivant la revendication 2, **caractérisé en ce que** l'agent indicateur utilisé est envoyé dans le réservoir de lessive (3).

4. Procédé suivant l'une des revendications 1 .à 3, **caractérisé en ce que** l'installation (2) est rincée par au moins un agent supplémentaire et l'agent indicateur est envoyé dans l'installation (2) après la dernière étape de nettoyage.

5. Procédé suivant l'une des revendications 1 à 4, **caractérisé en ce que** l'agent indicateur est envoyé dans l'installation (2) avant une étape de stérilisation.

6. Procédé suivant l'une des revendications 1 à 5, **caractérisé en ce qu'**une modification provoquée par l'agent indicateur, en particulier un virage de couleur, est établie par un dispositif de contrôle (13) et comparée à une valeur de consigne.

7. Procédé suivant la revendication 6, **caractérisé en ce que** le dispositif de contrôle (13) présente un premier et un second détecteur de couleur (13a, 13b), le premier détecteur de couleur étant disposé en amont de l'envoi de l'agent indicateur dans l'installation (2) et le second détecteur de couleur étant disposé en aval de la sortie de l'installation (2).

8. Procédé suivant l'une au moins des revendications 1 à 7, **caractérisé en ce que** l'agent indicateur se situe dans un réservoir (12) avant la vérification du résultat de nettoyage.

9. Procédé suivant l'une des revendications 1 à 7, **caractérisé par** son application pour le nettoyage d'un filtre à membrane, en particulier d'un filtre en fibres creuses de matière synthétique.
